# EUROPEAN PATENT APPLICATION

(11) **EP 4 596 922 A1**
(43) Date of publication of application: **06.08.2025**
(21) Application number: 24802615.5
(22) Date of filing: 20.03.2024
(51) Int. Cl.: F16H 57/12, F16H 55/24, F16H 25/24, B60N 2/02, F16H 57/031, H02K 7/00

(54) **GEARBOX AXIAL CLEARANCE COMPENSATION STRUCTURE**

(30) Priority: 11.05.2023 CN 202310528946
(71) Applicant: Keiper (Changshu) Seating Mechanisms Co., Ltd., Suzhou, Jiangsu 215533 (CN)
(72) Inventor: DING, Pengfei, Suzhou, Jiangsu 215533 (CN); SUN, Peijing, Suzhou, Jiangsu 215533 (CN); CHANG, Jian, Suzhou, Jiangsu 215533 (CN); YE, Zhouan, Suzhou, Jiangsu 215533 (CN); LI, Yanyun, Suzhou, Jiangsu 215533 (CN)
(74) Representative: Schweiger, Martin
(86) International application number: PCT/CN2024/082644
(87) International publication number: WO 2024/230327

(57) **Abstract**

A gearbox axial clearance compensation structure includes a gearbox casing (10), a gearbox cover (20), a transmission assembly and a wedge-shaped block (60). The transmission assembly is arranged inside the gearbox casing. The gearbox cover is mounted on the gearbox casing. The wedge-shaped block (60) is configured to eliminate an axial clearance between the transmission assembly and the gearbox casing. The wedge-shaped block further includes a retaining structure capable of retaining the wedge-shaped block in a position to eliminate the axial clearance. With the gearbox axial clearance compensation structure, the axial clearance inside the gearbox is completely compensated by the wedge-shaped block, and the wedge-shaped block is retained by the retaining structure in the position to eliminate the axial clearance all the time, enabling the gearbox to bear greater tension and pressure, and avoiding the formation of a significant clearance in the gearbox.

## Description

### TECHNICAL FIELD

The present invention relates to the field of transmission technologies, and in particular, to a gearbox axial clearance compensation structure.

### BACKGROUND

At present, with the development of intelligent cockpits for electric vehicles, there are more application scenarios for seat transmission members, and working conditions of are becoming increasingly complex. In addition, customers have higher requirements for comfort, which in turn leads to higher requirements on the working clearance of the adjustment mechanism. Conventional wave washers are rigid in only one direction and cannot meet the increasingly more stringent requirements for comfort, especially for some new working conditions where the gearbox is subjected to both tension and pressure. Some new working conditions involve switching between tension and pressure on the gearbox, and to provide a smooth seat adjustment for passengers under the working conditions involving switching between tension and pressure, a highly rigid structure is required to eliminate gearbox clearance.

It is found through search that some structures with a function of adjusting the gearbox clearance of a mechanism use a wedge-shaped block. For example, Chinese Patent Application No. CN201880085730 discloses a transmission housing unit and a transmission unit having a wedge-shaped compensation element for axial play compensation. Chinese Patent Application No. CN202110212239 discloses a transmission housing unit having a stop disc which is tightly clamped. German Patent DE19520886C1 discloses a worm gear for vehicles. In all the patents, a spring is used, and a holding force is applied to the wedge-shaped block by compressing the spring between the box cover and the wedge-shaped block. Korean Patent KR1020190009231 discloses a small motor unit for vehicles, which has an improved axial play prevention structure and uses an integral wedge-shaped block with elasticity. When the box cover is pressed downward, an elastic O-shaped structure on top of the wedge-shaped block is compressed to apply a downward force to the slope portion of the wedge-shaped block to maintain the position of the wedge-shaped block.

Similar seat adjustment products of KEIPER&BOSCH use an elastic member (e.g., a wave washer) to absorb the accumulated tolerance inside the gearbox. Wave washers in products from different manufacturers have different shapes and mounting manners. The wave washer can only ensure that there is no clearance inside the gearbox and no significant clearance is generated when a force is applied to one side of the gearbox. However, when the wave washer side of the gearbox is subjected to a relatively large pulling force or is alternately subjected to forces in two directions, the generation of a significant clearance inside the gearbox still cannot be avoided, failing to meet the increasingly higher demands of customers. Therefore, it is necessary to provide a gearbox structure which is completely clearance-free.

### SUMMARY

A technical problem to be resolved by the present invention is to solve the problem that the generation of a significant clearance inside the gearbox cannot be avoided and provide a gearbox axial clearance compensation structure. The gearbox axial clearance compensation structure is a structure that can completely eliminate an axial clearance inside the gearbox, is easy to mount, and can remain in place for a long period of time.

To achieve the foregoing objective, the present invention provides a gearbox axial clearance compensation structure, including a gearbox casing, a gearbox cover, a transmission assembly, and a wedge-shaped block, where the transmission assembly is arranged inside the gearbox casing, the gearbox cover is mounted on the gearbox casing, the wedge-shaped block is configured to eliminate an axial clearance between the transmission assembly and the gearbox casing, and the wedge-shaped block further includes a retaining structure capable of retaining the wedge-shaped block in a position to eliminate the axial clearance.

In a preferred embodiment of the present invention, the gearbox axial clearance compensation structure further includes a gearbox cover, where the gearbox cover is mounted on the gearbox casing, and the retaining structure is pressed by the gearbox cover to retain the wedge-shaped block in the position to eliminate the axial clearance.

In a preferred embodiment of the present invention, a slope is provided in the gearbox casing, one end surface of the wedge-shaped block is in contact with the transmission assembly, and an other end surface of the wedge-shaped block is in contact with the slope.

In a preferred embodiment of the present invention, the transmission assembly is a lead screw gear assembly, the lead screw gear assembly includes a lead screw shaft and a gear mounted on the lead screw shaft, the gear is arranged in the gearbox casing, and the slope is arranged in the gearbox casing and close to a position at which the lead screw extends out of the gearbox casing.

In a preferred embodiment of the present invention, the transmission assembly further includes a pair of thrust bearing sets mounted on the lead screw shaft and respectively located at a front end and a rear end of the gear, and the front end of the gear is an end opposite to the rear end of the gear along an axis of the lead screw shaft; one end surface of the thrust bearing set at the front end of the gear is in contact with a plane in the gearbox casing away from the position at which the lead screw shaft extends out of the gearbox casing, and an other end surface of the thrust bearing set at the front end of the gear is in contact with the front end of the gear; one end surface of the thrust bearing set at the rear end of the gear is in contact with the rear end of the gear; and the wedge-shaped block is inserted between the other end surface of the thrust bearing set at the rear end of the gear and the slope, and an end surface of the wedge-shaped block is in contact with an other end surface of the thrust bearing set at the rear end of the gear.

In a preferred embodiment of the present invention, the gearbox cover is fixed to the gearbox casing through a plurality of first fastening screws.

In a preferred embodiment of the present invention, the retaining structure includes an oblique hole provided at a top of the wedge-shaped block, and further includes a second fastening screw, and the second fastening screw is obliquely screwed through the gearbox cover to come into contact with the oblique hole to drive the wedge-shaped block to move.

In a preferred embodiment of the present invention, a diameter of the oblique hole is less than a diameter of the second fastening screw.

In a preferred embodiment of the present invention, the second fastening screw is tapped into the oblique hole.

In a preferred embodiment of the present invention, the wedge-shaped block is made by two-shot injection molding, and hardness of a lower half of the wedge-shaped block in contact with the other end surface of the thrust bearing set at the rear end of the gear and the slope is greater than hardness of an upper half of the wedge-shaped block in contact with the gearbox cover; and the upper half of the wedge-shaped block in contact with the gearbox cover forms the retaining structure.

In a preferred embodiment of the present invention, the lower half of the wedge-shaped block is made of hard plastic, and the upper half of the wedge-shaped block is made of high-elasticity plastic or high-elasticity rubber.

In a preferred embodiment of the present invention, the retaining structure is a spring steel bar, two ends of the spring steel bar are connected to a top of the wedge-shaped block, and the spring steel bar is in contact with the gearbox cover to receive pressure applied by the gearbox cover to drive the wedge-shaped block to move.

In a preferred embodiment of the present invention, the wedge-shaped block is made by insert injection molding.

In a preferred embodiment of the present invention, a middle portion of the spring steel bar is bulged, and is in contact with the gearbox cover to receive the pressure applied by the gearbox cover.

In a preferred embodiment of the present invention, the wedge-shaped block is integrally formed by injection molding, and the retaining structure is arranged on an upper half of the wedge-shaped block in contact with the gearbox cover.

In a preferred embodiment of the present invention, the retaining structure is formed by a plurality of force distribution holes provided on the upper half of the wedge-shaped block in contact with the gearbox cover, and the plurality of force distribution holes transversely run through the wedge-shaped block.

In a preferred embodiment of the present invention, the force distribution holes include a large elliptical force distribution hole and a plurality of small force distribution holes, and the plurality of small force distribution holes are distributed above the large force distribution hole.

In a preferred embodiment of the present invention, the plurality of small force distribution holes are distributed in an arc shape above the large force distribution hole.

In a preferred embodiment of the present invention, diameters of the plurality of small force distribution holes are equal or not equal.

In a preferred embodiment of the present invention, a plurality of weight-reducing holes are provided on the wedge-shaped block or a lower half of the wedge-shaped block.

In a preferred embodiment of the present invention, the plurality of weight-reducing holes are arranged on the wedge-shaped block or the lower half of the wedge-shaped block in a symmetrical manner.

In a preferred embodiment of the present invention, the wedge-shaped block or a lower half of the wedge-shaped block is of an inverted U-shaped structure.

In a preferred embodiment of the present invention, a surface of the wedge-shaped block or a lower half of the wedge-shaped block which is in contact with the other end surface of the thrust bearing set at the rear end of the gear is a plane, and a surface of the wedge-shaped block or the lower half of the wedge-shaped block which is in contact with the slope in the gearbox casing is a slope.

By the foregoing technical solution, in the present invention, the axial clearance inside the gearbox is completely compensated by the wedge-shaped block, and the wedge-shaped block is retained by the retaining structure in the position to eliminate the axial clearance all the time, enabling the gearbox to bear greater tension and pressure, and avoiding the formation of a significant clearance in the gearbox.

### BRIEF DESCRIPTION OF THE DRAWINGS

FIG. 1 is an exploded view 1 of a gearbox axial clearance compensation structure according to Embodiment 1 of the present invention;
FIG. 2 is an exploded view 2 of the gearbox axial clearance compensation structure according to Embodiment 1 of the present invention;
FIG. 3 is an exploded view 3 of the gearbox axial clearance compensation structure according to Embodiment 1 of the present invention;
FIG. 4 is a schematic assembled view of the gearbox axial clearance compensation structure according to Embodiment 1 of the present invention;
FIG. 5 is an exploded view of a gearbox axial clearance compensation structure according to Embodiment 2 of the present invention;
FIG. 6 is a schematic structural diagram of a wedge-shaped block in the gearbox axial clearance compensation structure according to Embodiment 2 of the present invention;
FIG. 7 is an exploded view of a gearbox axial clearance compensation structure according to Embodiment 3 of the present invention;
FIG. 8 is a schematic structural diagram of a wedge-shaped block in the gearbox axial clearance compensation structure according to Embodiment 3 of the present invention;
FIG. 9 is an exploded view of a gearbox axial clearance compensation structure according to Embodiment 4 of the present invention; and
FIG. 10 is a schematic structural diagram of a wedge-shaped block in the gearbox axial clearance compensation structure according to Embodiment 4 of the present invention;

### DETAILED DESCRIPTION

The present invention is further described below with reference to the accompanying drawings and specific embodiments.

A gearbox axial clearance compensation structure of the present invention includes a gearbox casing 10, a gearbox cover 20, a transmission assembly, and a wedge-shaped block 60. The transmission assembly is arranged inside the gearbox casing 10. The gearbox cover 20 is fixed to the gearbox casing 10 through four fastening screws 40 (i.e., the first fastening screw described above). The wedge-shaped block 60 is configured to eliminate an axial clearance between the transmission assembly and the gearbox casing 10. The gearbox axial clearance compensation structure further includes a retaining structure capable of retaining the wedge-shaped block 60 in a position to eliminate the axial clearance.

The present invention is described in detail below through an example in which the transmission assembly is a lead screw gear assembly 30.

### Embodiment 1

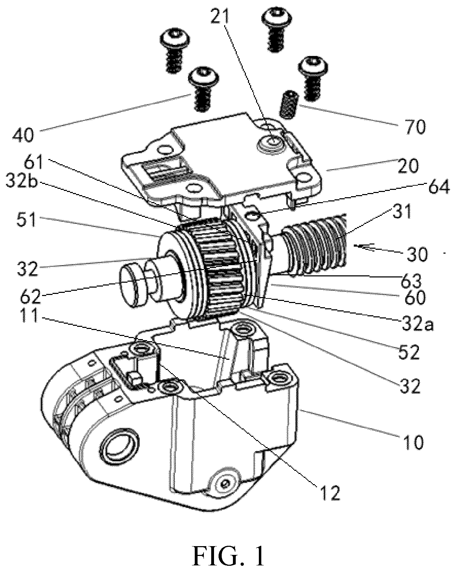

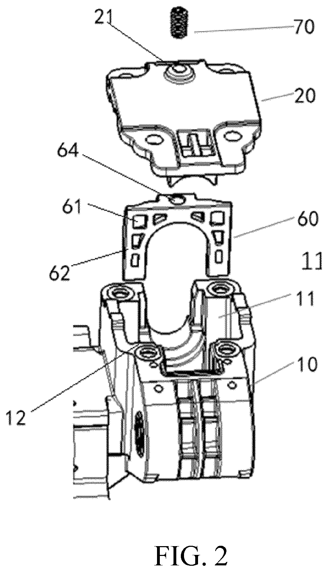

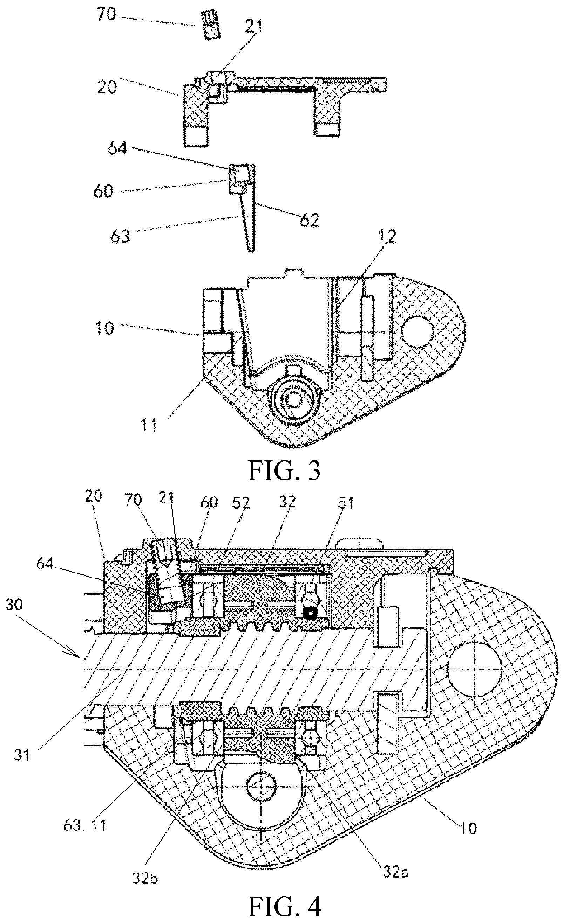

Referring to FIG. 1 to FIG. 4, a gearbox axial clearance compensation structure includes a gearbox casing 10, a gearbox cover 20, and a lead screw gear assembly 30. The lead screw gear assembly 30 includes a lead screw shaft 31 and a gear 32 mounted on the lead screw shaft 31. The gear 32 is arranged in the gearbox casing 10.

This embodiment has the following characteristics.

A retaining structure of this embodiment includes an oblique hole 64 provided at a top of the wedge-shaped block 60 and further includes a fastening screw 70 (i.e., the second fastening screw described above).

A slope 11 is provided in the gearbox casing 10 and close to a position at which the lead screw shaft 31 extends out of the gearbox casing 10, i.e., a position at a rear end 32a of the gear 32. The gearbox axial clearance compensation structure further includes a pair of thrust bearing sets 51 and 52 and a wedge-shaped block 60.

The pair of thrust bearing sets 51 and 52 are mounted on the lead screw shaft 31 and respectively located at a front end 32b and the rear end 32a of the gear 32. The front end 32b of the gear 32 is an end opposite to the rear end 32a of the gear 32 along an axis of the lead screw shaft 31.

One end surface of the thrust bearing set 51 at the front end 32b of the gear 32 is in contact with a plane 12 in the gearbox casing 10 away from the position at which the lead screw shaft 31 extends out of the gearbox casing 10, and an other end surface of the thrust bearing set 51 at the front end 32b of the gear 32 is in contact with the front end 32b of the gear 32. One end surface of the thrust bearing set 52 at the rear end 32a of the gear 32 is in contact with the rear end 32a of the gear 32.

The wedge-shaped block 60 is of an inverted U-shaped structure, and a plurality of weight-reducing holes 61 are arranged on the wedge-shaped block 60. The weight-reducing holes 61 are arranged on the wedge-shaped block 60 in a symmetrical manner, or may also be arranged in an asymmetrical manner. An end surface 62 of the wedge-shaped block 60 which is in contact with the other end surface of the thrust bearing set 51 at the rear end 32a of the gear 32 is a plane, and an end surface 63 of the wedge-shaped block 60 which is in contact with the slope 11 in the gearbox casing 10 is a slope. The oblique hole 64 is provided at the top of the wedge-shaped block 60. A diameter of the oblique hole 64 is less than a diameter of the fastening screw 70.

During assembly, the gear 32, the pair of thrust bearing sets 51 and 52, and the part of the lead screw shaft 31 mounted with the gear 32 and the pair of thrust bearing sets 51 and 52 are arranged in the gearbox casing 10, and the other part of the lead screw shaft 31 extends out from the gearbox casing 10.

The wedge-shaped block 60 is arranged in the gearbox casing 10, and is inserted between the other end surface of the thrust bearing set 52 at the rear end 32a of the gear 32 and the slope 11. The end surface 62 of the wedge-shaped block 60 is in contact with the other end surface of the thrust bearing set 52 at the rear end 32a of the gear 32, and the other end surface 63 of the wedge-shaped block 60 is in contact with the slope 11. After the wedge-shaped block 60 is inserted, the gearbox cover 20 is mounted on the gearbox casing 10, and the gearbox cover 20 is tightly fastened downward to the gearbox casing 10 through four fastening screws 40. Finally, the fastening screw 70 is screwed obliquely through a small circular hole 21 on the gearbox cover 20 and tapped into the gearbox casing 10. The fastening screw 70 is tapped down to a specific height relative to the gearbox cover 20 to complete the assembly.

After being tapped down to the specific depth, the fastening screw 70 comes into contact with the oblique hole 64 at the top of the wedge-shaped block 60. In this case, the fastening screw 70 continues to be tapped downward. Because the diameter of the oblique hole 64 at the top of the wedge-shaped block 60 is relatively small, the fastening screw 70 first pushes the wedge-shaped block 60 downward along the slope 11. In addition, the wedge-shaped block 60 synchronously moves toward the gear 32 under the action of the slope 11, to reduce an axial clearance between the gear 32 and an interior of the gearbox casing 10, until there is no axial clearance left between the gear 32 and the interior of the gearbox casing 10. In this case, the fastening screw 70 continues to be tapped downward. Because there is no clearance left, the wedge-shaped block 60 cannot continue to move downward, and the fastening screw 70 is tapped along the oblique hole 64 at the top of the wedge-shaped block 60. When the fastening screw 70 is tapped down to a certain height, the assembly is completed. In this case, the fastening screw 70 automatically connects the gearbox cover 20 and the wedge-shaped block 60 through the gearbox cover 20 and the oblique hole 64 at the top of the wedge-shaped block 60, and retains the position of the wedge-shaped block 60 on the slope 11.

### Embodiment 2

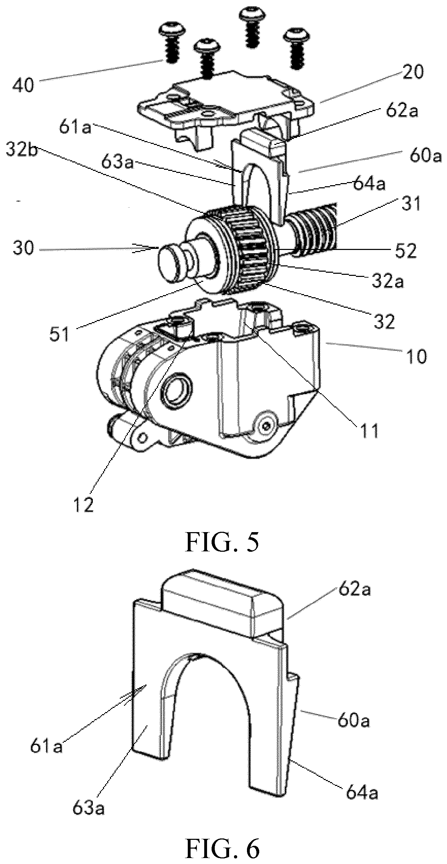

Referring to FIG. 5 and FIG. 6, this embodiment is different from Embodiment 1 in that a retaining structure of this embodiment is different from the retaining structure of Embodiment 1, and no weight-reducing hole is provided on a wedge-shaped block 60a. The wedge-shaped block 60a of this embodiment is made by two-shot injection molding. Hardness of a lower half 61a of the wedge-shaped block 60a in contact with the other end surface of the thrust bearing set 52 at the rear end 32a of the gear 32 and the slope 11 is greater than hardness of an upper half 62a of the wedge-shaped block 60a in contact with the gearbox cover 20. In particular, the lower half 61a of the wedge-shaped block 60a is made of hard plastic, and the upper half of the wedge-shaped block 60a is made of high-elasticity plastic or high-elasticity rubber, which has certain elasticity to form the retaining structure.

One end surface 63a of the lower half 61a of the wedge-shaped block 60a is in contact with the other end surface of the thrust bearing set 52 at the rear end 32a of the gear 32, and an other end surface 64a of the wedge-shaped block 60 is in contact with the slope 11. As such, the wedge-shaped block 60a is in contact with the thrust bearing set 52 and the gearbox casing 10.

When the gearbox cover 20 is tightly closed, the gearbox cover 20 is in interference fit with space of an upper half 62a of the wedge-shaped block 60a in a height direction, and the upper half 62a of the wedge-shaped block 60a is pressed by the gearbox cover 20, to generate a force that pushes the lower half 61a of the wedge-shaped block 60a downward. Therefore, the lower half 61a of the wedge-shaped block 60a moves downward along the slope 11 of the gearbox casing 10, to compensate for the axial clearance between the gear 32 and the gearbox casing 10.

The rest of this embodiment is the same as that in Embodiment 1.

### Embodiment 3

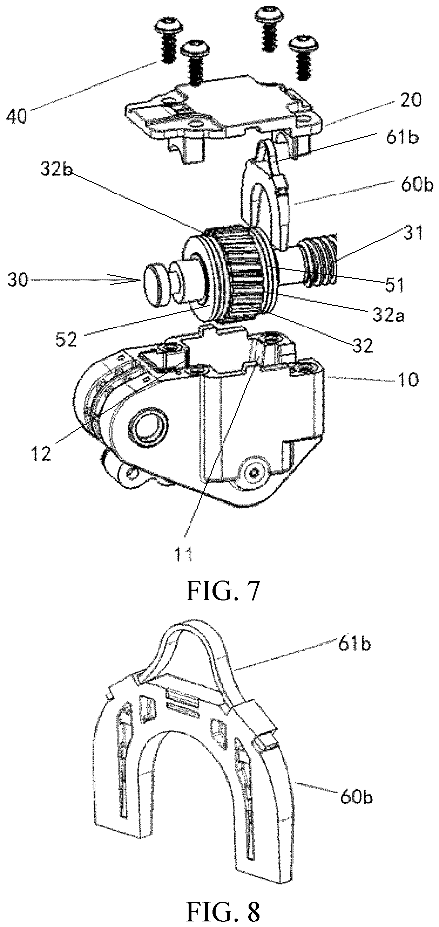

Referring to FIG. 7 and FIG. 8, this embodiment is different from Embodiment 1 in that a retaining structure of this embodiment is different from the retaining structure of Embodiment 1, and is a spring steel bar 61b.

The wedge-shaped block 60b of Embodiment 1 is made by insert injection molding. Two ends of the spring steel bar 61b are embedded at a top of the wedge-shaped block 60b. The wedge-shaped block 60b is made of hard plastic and is of an inverted U-shaped structure, for contact with the gear 32 and the thrust bearing set 52 to meet an axial strength requirement of the gearbox.

A plurality of weight-reducing holes 62b are provided on the wedge-shaped block 60b. The weight-reducing holes 62b are arranged on the wedge-shaped block 60b in a symmetrical manner, or may also be arranged in an asymmetrical manner.

The spring steel bar 61b has certain elasticity. The two ends of the spring steel bar 61b are connected to the wedge-shaped block 60b. A middle portion of the spring steel bar 61b is bulged, and is in contact with the gearbox cover 10 to receive the pressure applied by the gearbox cover 10.

When the gearbox cover 20 is tightly closed, the gearbox cover 20 is in interference fit with space of an upper half 62b of the wedge-shaped block 60b in a height direction, and the spring steel bar 61b is pressed by the gearbox cover 20, to generate a force that pushes the wedge-shaped block 60b downward. Therefore, the wedge-shaped block 60b moves downward along the slope 11 of the gearbox casing 10, to compensate for the axial clearance between the gear 32 and the gearbox casing 10.

The rest of this embodiment is the same as that in Embodiment 1.

### Embodiment 4

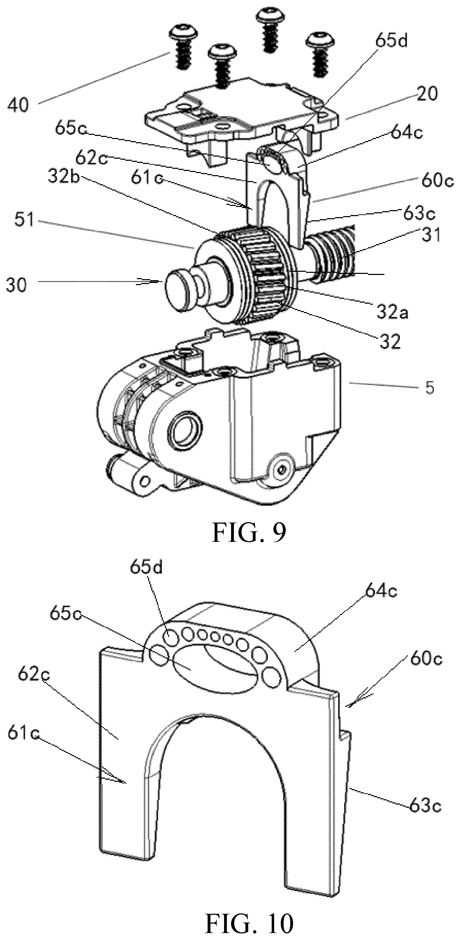

Referring to FIG. 9 and FIG. 10, this embodiment is different from Embodiment 1 in that a retaining structure of this embodiment is different from the retaining structure of Embodiment 1, and no weight-reducing hole is provided on a wedge-shaped block 60c.

The wedge-shaped block 60c of this embodiment is integrally formed by injection molding. One end surface 62c of a lower half 61c of the wedge-shaped block 60c is in contact with the other end surface of the thrust bearing set 52 at the rear end 32a of the gear 32, and an other end surface 63c of the wedge-shaped block 60c is in contact with the slope 11. As such, the wedge-shaped block 60a is in contact with the thrust bearing set 52 and the gearbox casing 10.

A plurality of force distribution holes are provided on an upper half 64c of the wedge-shaped block 60c in contact with the gearbox cover 10, and the force distribution holes form a retaining structure which has certain strength in an axial direction of the gearbox casing 10 and also has certain elasticity in a longitudinal direction of the gearbox. The force distribution holes include a large elliptical force distribution hole 65c and a plurality of small force distribution holes 65d. The plurality of small force distribution holes 65d are distributed in an arc shape above the large force distribution hole 65c. Diameters of the plurality of small force distribution holes 65d are equal or not equal.

When the gearbox cover 20 is tightly closed, the gearbox cover 20 is in interference fit with space of an upper half 62a of the wedge-shaped block 60a in a height direction, and the upper half 64c of the wedge-shaped block 60c is pressed by the gearbox cover 20, to generate a force that pushes the wedge-shaped block 60c downward. Therefore, the wedge-shaped block 60c moves downward along the slope 11 of the gearbox casing 10, to compensate for the axial clearance between the gear 32 and the gearbox casing 10.

The rest of this embodiment is the same as that in Embodiment 1.

## Claims

1. A gearbox axial clearance compensation structure, comprising a gearbox casing, a gearbox cover, a transmission assembly, and a wedge-shaped block, wherein the transmission assembly is arranged inside the gearbox casing, the gearbox cover is mounted on the gearbox casing, the wedge-shaped block is configured to eliminate an axial clearance between the transmission assembly and the gearbox casing, and the wedge-shaped block further comprises a retaining structure capable of retaining the wedge-shaped block in a position to eliminate the axial clearance.

2. The gearbox axial clearance compensation structure according to claim 1, further comprising a gearbox cover, wherein the gearbox cover is mounted on the gearbox casing, and the retaining structure is pressed by the gearbox cover to retain the wedge-shaped block in the position to eliminate the axial clearance.

3. The gearbox axial clearance compensation structure according to claim 2, wherein a slope is provided in the gearbox casing, one end surface of the wedge-shaped block is in contact with the transmission assembly, and an other end surface of the wedge-shaped block is in contact with the slope.

4. The gearbox axial clearance compensation structure according to claim 3, wherein the transmission assembly is a lead screw gear assembly, the lead screw gear assembly comprises a lead screw shaft and a gear mounted on the lead screw shaft, the gear is arranged in the gearbox casing, and the slope is arranged in the gearbox casing and close to a position at which the lead screw extends out of the gearbox casing.

5. The gearbox axial clearance compensation structure according to claim 4, wherein the transmission assembly further comprises a pair of thrust bearing sets mounted on the lead screw shaft and respectively located at a front end and a rear end of the gear, and the front end of the gear is an end opposite to the rear end of the gear along an axis of the lead screw shaft; one end surface of the thrust bearing set at the front end of the gear is in contact with a plane in the gearbox casing away from the position at which the lead screw shaft extends out of the gearbox casing, and an other end surface of the thrust bearing set at the front end of the gear is in contact with the front end of the gear; one end surface of the thrust bearing set at the rear end of the gear is in contact with the rear end of the gear; and the wedge-shaped block is inserted between the other end surface of the thrust bearing set at the rear end of the gear and the slope, and an end surface of the wedge-shaped block is in contact with an other end surface of the thrust bearing set at the rear end of the gear.

6. The gearbox axial clearance compensation structure according to claim 2, wherein the gearbox cover is fixed to the gearbox casing through a plurality of first fastening screws.

7. The gearbox axial clearance compensation structure according to any one of claims 1 to 6, wherein the retaining structure comprises an oblique hole provided at a top of the wedge-shaped block, and further comprises a second fastening screw, and the second fastening screw is obliquely screwed through the gearbox cover to come into contact with the oblique hole to drive the wedge-shaped block to move.

8. The gearbox axial clearance compensation structure according to claim 7, wherein a diameter of the oblique hole is less than a diameter of the second fastening screw.

9. The gearbox axial clearance compensation structure according to claim 8, wherein the second fastening screw is tapped into the oblique hole.

10. The gearbox axial clearance compensation structure according to any one of claims 1 to 6, wherein the wedge-shaped block is made by two-shot injection molding, and hardness of a lower half of the wedge-shaped block in contact with the other end surface of the thrust bearing set at the rear end of the gear and the slope is greater than hardness of an upper half of the wedge-shaped block in contact with the gearbox cover; and the upper half of the wedge-shaped block in contact with the gearbox cover forms the retaining structure.

11. The gearbox axial clearance compensation structure according to claim 10, wherein the lower half of the wedge-shaped block is made of hard plastic, and the upper half of the wedge-shaped block is made of high-elasticity plastic or high-elasticity rubber.

12. The gearbox axial clearance compensation structure according to any one of claims 1 to 6, wherein the retaining structure is a spring steel bar, two ends of the spring steel bar are connected to a top of the wedge-shaped block, and the spring steel bar is in contact with the gearbox cover to receive pressure applied by the gearbox cover to drive the wedge-shaped block to move.

13. The gearbox axial clearance compensation structure according to claim 12, wherein the wedge-shaped block is made by insert injection molding.

14. The gearbox axial clearance compensation structure according to claim 12, wherein a middle portion of the spring steel bar is bulged, and is in contact with the gearbox cover to receive the pressure applied by the gearbox cover.

15. The gearbox axial clearance compensation structure according to any one of claims 1 to 6, wherein the wedge-shaped block is integrally formed by injection molding, and the retaining structure is arranged on an upper half of the wedge-shaped block in contact with the gearbox cover.

16. The gearbox axial clearance compensation structure according to claim 15, wherein the retaining structure is formed by a plurality of force distribution holes provided on the upper half of the wedge-shaped block in contact with the gearbox cover, and the plurality of force distribution holes transversely run through the wedge-shaped block.

17. The gearbox axial clearance compensation structure according to claim 16, wherein the force distribution holes comprise a large elliptical force distribution hole and a plurality of small force distribution holes, and the plurality of small force distribution holes are distributed above the large force distribution hole.

18. The gearbox axial clearance compensation structure according to claim 17, wherein the plurality of small force distribution holes are distributed in an arc shape above the large force distribution hole.

19. The gearbox axial clearance compensation structure according to claim 17, wherein diameters of the plurality of small force distribution holes are equal or not equal.

20. The gearbox axial clearance compensation structure according to any one of claims 1 to 6, wherein a plurality of weight-reducing holes are provided on the wedge-shaped block or a lower half of the wedge-shaped block.

21. The gearbox axial clearance compensation structure according to claim 20, wherein the plurality of weight-reducing holes are arranged on the wedge-shaped block or the lower half of the wedge-shaped block in a symmetrical manner.

22. The gearbox axial clearance compensation structure according to any one of claims 1 to 6, wherein the wedge-shaped block or a lower half of the wedge-shaped block is of an inverted U-shaped structure.

23. The gearbox axial clearance compensation structure according to any one of claims 1 to 6, wherein a surface of the wedge-shaped block or a lower half of the wedge-shaped block which is in contact with the other end surface of the thrust bearing set at the rear end of the gear is a plane, and a surface of the wedge-shaped block or the lower half of the wedge-shaped block which is in contact with the slope in the gearbox casing is a slope.
